# DEMANDE DE BREVET EUROPEEN

(11) **EP 1 596 287 A2**
(43) Date de publication de la demande: **16.11.2005**
(21) Numéro de dépôt: 05290781.3
(22) Date de dépôt: 08.04.2005
(51) Int. Cl.: G06F 9/38

(54) **Procédé de délivrance de mots d'instruction trés longs à un processeur**

(30) Priorité: 09.04.2004 FR 0403747
(71) Demandeur: STMicroelectronics S.A., 92120 Montrouge (FR)
(72) Inventeur: Audrain, Stéphane, 38000 Grenoble (FR); Gentit, Jean-Marc, 38320 Herbeys (FR)
(74) Mandataire: Casalonga, Axel

(57) **Abrégé**

Un circuit intégré comprend dans un même substrat un processeur (PROC), et un dispositif de mémoire programme (DM) apte à délivrer audit processeur des instructions VLIW avec au moins m champs opératifs. Le dispositif de mémoire comprend : une mémoire dictionnaire (MDI) comportant des instructions dictionnaires (INSD) chacune comprenant au moins m instructions élémentaires dictionnaires ; une mémoire d'instructions comportant des instructions primaires (INSP) chacune associée à une instruction VLIW et contenant ses données, l'adresse d'une instruction dictionnaire, et m bits de masquage (bi); m moyens de sélection (MSi) respectivement commandés par les bits de masquage et délivrant chacun soit une instruction NOP, soit l'instruction élémentaire dictionnaire correspondant au bit de masquage, pour reconstituer, en combinaison avec les données de l'instruction primaire, l'instruction VLIW.

## Description

L'invention concerne notamment les mémoires programmes associées à des processeurs, par exemple des processeurs de traitement de signal (DSP), opérant avec des mots d'instructions très long, (Very Long Instruction Word (VLIW) en anglais), et plus particulièrement les circuits intégrés incorporant de tels processeurs embarqués (embedded) avec leur mémoire programme associée. On rappelle qu'un processeur embarqué est par exemple réalisé conjointement à d'autres composants par un même procédé (process) et destiné à être intégrés ensemble au sein d'un circuit intégré spécifique (ASIC).

L'invention s'applique avantageusement mais non limitativement aux processeurs vidéo

La mémoire programme d'un processeur VLIW est destinée à comporter des instructions VLIW. Par exemple, la longueur d'une instruction VLIW est de 64 bits répartis en un champ de données de 16 bits contenant une « valeur immédiate » (ou « immediate value » selon une dénomination habituellement utilisée par l'homme de métier) et un ensemble de 48 bits comportant des champs destinés à l'unité arithmétique (DCU), à l'unité d'adressage (ACU), et au séquenceur (SEQ) du processeur.

La taille d'une telle mémoire programme est importante et peut représenter jusqu'à la moitié de la taille du processeur embarqué, ce qui constitue un inconvénient majeur.

L'invention vise à apporter une solution à ce problème.

Un but de l'invention est de proposer un dispositif de mémoire programme de taille réduite, dont l'organisation s'appuie sur le fait que sur les 2⁴⁸ instructions possibles par exemple, beaucoup ne sont pas utilisées. De plus une instruction peut être utilisée plusieurs fois au cours d'un même programme. La détection de ces instructions redondantes permet également de diminuer la taille de la mémoire.

À cet effet, l'invention propose un circuit intégré comprenant au sein d'un même substrat un processeur, et un dispositif de mémoire programme apte à délivrer au processeur un jeu de n mots d'instruction très longs, chaque mot d'instruction très long comprenant une première partie (par exemple au moins certains bits d'une valeur immédiate) et une deuxième partie comportant au moins m champs opératifs contenant chacun une instruction élémentaire (qui peut être par exemple de type opératif ou bien non opératif (NOP)).

Le dispositif de mémoire programme comprend une mémoire dictionnaire comportant p instructions dictionnaire, p étant inférieur à n, chaque instruction dictionnaire comportant au moins m champs opératifs (m=3 par exemple) contenant chacun une instruction élémentaire dictionnaire faisant partie de l'ensemble desdites instructions élémentaires. Une instruction élémentaire dictionnaire peut être une instruction élémentaire opérative ou bien une instruction non opérative (NOP).

Le dispositif de mémoire programme comporte également une mémoire d'instructions comportant n instructions primaires, chaque instruction primaire étant associée à un mot d'instruction très long et comportant une première partie correspondant à la première partie dudit mot d'instruction très long, un champ d'adresse contenant l'adresse d'une instruction dictionnaire choisie compte tenu du contenu de la deuxième partie dudit mot d'instruction très long, et m bits de masquage respectivement associés aux m champs opératifs de l'instruction dictionnaire.

Le dispositif de mémoire comporte encore m moyens de sélection respectivement commandés par les m bits de masquage et délivrant chacun en fonction de la valeur du bit de masquage correspondant soit une instruction élémentaire non opérative soit l'instruction élémentaire dictionnaire contenue dans le champ opératif correspondant, le mot d'instruction très long étant reconstitué à partir de la première partie de ladite instruction primaire et d'au moins les sorties des moyens de sélection.

En d'autres termes, l'invention utilise une « compression d'instructions » en combinaison avec une mémoire d'instructions pointant vers une mémoire dictionnaire et des moyens de sélection commandés par des bits de masquage. Plus précisément, si le code contient deux instructions identiques ou plus, cette instruction n'est stockée qu'une seule fois dans la mémoire dictionnaire. Ce nouveau procédé de compression est basé sur le fait que les instructions VLIW sont formées de champs indépendants qui ne sont pas tous utilisés à chaque fois qu'une instruction est appelée. On utilise par exemple les instructions dictionnaires déjà stockées dans la mémoire dictionnaire en incluant une instruction NOP à la place des instructions élémentaires dictionnaires de l'instruction dictionnaire qui ne sont pas utilisées dans l'instruction VLIW considérée.

Selon un mode de réalisation, au moins une instruction élémentaire dictionnaire de chaque instruction dictionnaire est une instruction élémentaire opérative.

Les p instructions dictionnaires peuvent être réparties en m groupes distincts, chaque groupe contenant des instructions dictionnaires ayant un même nombre d'instructions élémentaires opératives.

Aussi on aura par exemple un groupe d'instructions dictionnaires comportant m (3 par exemple) instructions élémentaires opératives, un autre groupe formé d'instructions dictionnaires comportant m-1 instructions élémentaires opératives et une instruction NOP, et ainsi de suite jusqu'à un groupe comportant des instructions dictionnaires à une seule instruction élémentaire opérative.

En outre, le nombre d'instructions dictionnaires contenant k instructions élémentaires opératives peut être supérieur au nombre d'instructions dictionnaires contenant k-1 instructions élémentaires opératives, k variant de 2 à m.

Lorsque, la première partie de chaque mot d'instruction très long comprend un champ de données contenant un mot numérique de données (valeur immédiate), celui-ci peut être entièrement stocké dans la première partie de l'instruction primaire associée à ce mot d'instruction très long et stockée dans la mémoire d'instructions.

Selon une variante de l'invention, le mot numérique de données comporte une première portion contenue dans la première partie de l'instruction primaire associée à ce mot d'instruction très long, et une deuxième portion contenue dans l'instruction dictionnaire désignée par l'adresse contenue dans ladite instruction primaire. Le mot d'instruction très long est reconstitué à partir de la première partie de ladite instruction primaire, des sorties des moyens de sélection, et de ladite seconde portion contenu dans ladite instruction dictionnaire désignée.

De préférence, la première portion du champ de données numériques comporte les bits de poids faibles des données numériques et la seconde portion les bits de poids forts des données numériques.

L'invention a également pour objet un procédé de délivrance de mots d'instruction très longs vers un processeur qui comprend :
a) une compilation d'un programme exécutable en un jeu de n mots d'instructions très longs, chaque mot d'instruction comprenant une première partie et une deuxième partie comportant au moins m champ opératifs contenant chacun une instruction élémentaire,
b) l'élaboration et le stockage dans une mémoire dictionnaire de p instructions dictionnaires, p étant inférieur à n, chaque instruction dictionnaire comportant au moins m champs opératifs contenant chacun une instruction élémentaire dictionnaire faisant partie de l'ensemble desdites instructions élémentaires,
c) l'élaboration et le stockage dans une mémoire d'instructions de n instructions primaires, chaque instruction primaire étant associée à un mot d'instruction très long et comportant une première partie correspondant à la première partie dudit mot d'instruction très long, un champ d'adresse contenant l'adresse d'une instruction dictionnaire choisie compte tenu du contenu de la deuxième partie dudit mot d'instruction très long, et m bits de masquage respectivement associés aux m champs opératifs de l'instruction dictionnaire.

La délivrance d'un mot d'instruction très long comprend en outre :
d) le pointage d'une instruction primaire dans la mémoire d'instructions,
e) l'adressage de l'instruction dictionnaire à partir de l'adresse contenue dans le champ d'adresse pointé de ladite instruction primaire,
f) la sélection, en fonction de l'état des m bits de masquage de l'instruction primaire pointée, soit d'une instruction élémentaire non opérative soit d'une instruction élémentaire dictionnaire contenue dans le champ opératif correspondant de l'instruction dictionnaire adressée,
g) la reconstruction du mot d'instruction très long à partir de la première partie de ladite instruction primaire pointée et d'au moins les instructions élémentaires sélectionnées.

Par ailleurs l'étape b) peut comprendre les sous-étapes :
b1) sélectionner les secondes parties des mots d'instruction très longs, obtenus à l'issue de la compilation,
b2) éliminer les secondes parties redondantes de façon à conserver un jeu de secondes parties, toutes mutuellement différentes,
b3) stocker dans la mémoire dictionnaire, en tant qu'instructions dictionnaires les secondes parties comportant au moins m instructions élémentaires opératives,
b4) examiner successivement les secondes parties comportant m-k instructions élémentaires opératives, k variant successivement de 1 à m-1, chaque examen comportant :
   - l'élimination parmi les secondes parties examinées de celles pouvant être obtenues à partir des instructions dictionnaires déjà stockées dans la mémoire dictionnaire,
   - la combinaison éventuelle de certaines secondes parties restantes, de façon à obtenir des secondes parties comportant m-k+1 instructions élémentaires opératives et les stocker dans la mémoire dictionnaire en tant qu'instructions dictionnaires,
   - le stockage dans la mémoire dictionnaire des secondes parties résiduelles.

D'autres avantages et caractéristiques de l'invention apparaîtront à l'examen de la description détaillée d'un mode de mise en oeuvre de l'invention nullement limitatif, et des dessins annexés, sur lesquels :
- la figure 1 présente très schématiquement un circuit intégré avec un processeur et un dispositif de mémoire associé, selon l'invention,
- la figure 2 illustre schématiquement un exemple de mot d'instruction très long (VLIW),
- les figures 3 et 4 illustrent schématiquement des exemples d'instruction VLIW,
- les figures 5 et 6 illustrent schématiquement des exemples d'instructions primaires et dictionnaires selon l'invention,
- la figure 7 représente un exemple de réalisation d'un dispositif de mémoire selon l'invention,
- la figure 8 illustre schématiquement une organisation d'une mémoire dictionnaire d'un dispositif de mémoire selon l'invention,
- La figure 9 représente un organigramme d'un procédé de traitement des instructions dictionnaires selon l'invention,
- les figures 10 et 11 illustrent plus particulièrement des sous-étapes d'un procédé de traitement des instructions dictionnaires selon l'invention,
- la figure 12 présente une variante du dispositif de mémoire selon l'invention.

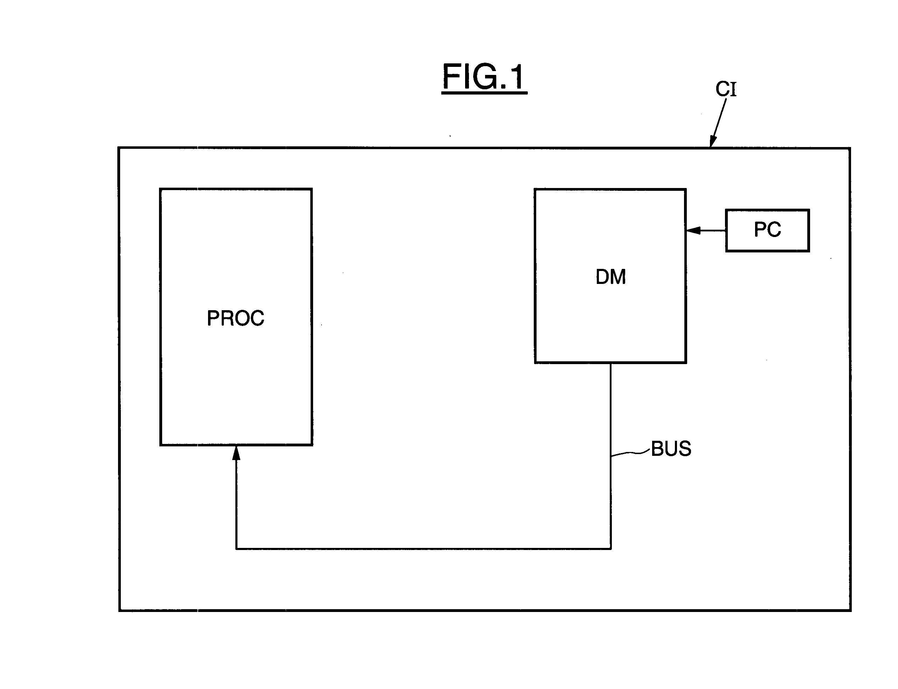

Sur la figure 1, on a représenté le circuit intégré CI du dispositif selon l'invention.

La référence PROC désigne un processeur connecté à un dispositif de mémoire DM par l'intermédiaire d'un bus BUS.

Un compteur programme PC, (« Program Counter » selon une dénomination habituellement utilisée par l'homme de métier) pointe à l'adresse du dispositif de mémoire DM dans le but de délivrer au processeur PROC, une instruction VLIW, par l'intermédiaire du bus BUS.

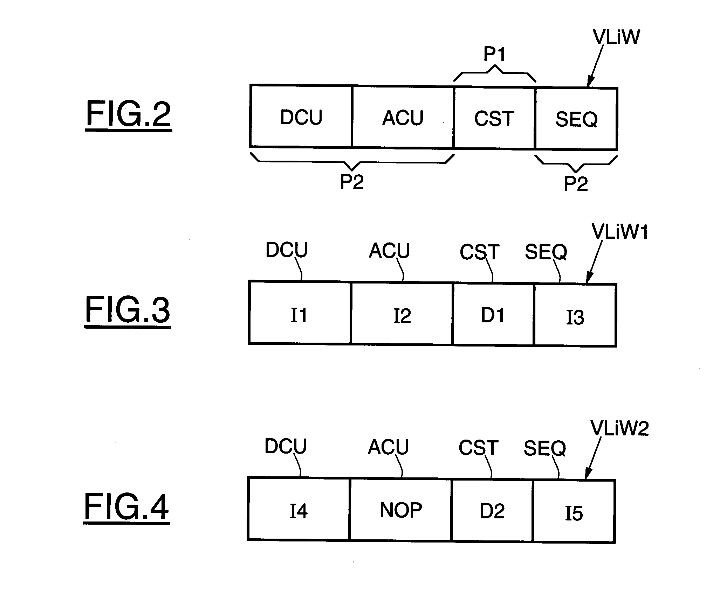

Si l'on se réfère à la figure 2, une instruction VLIW comprend, dans cet exemple : une première partie P1 comportant un champ de données numériques CST et une seconde partie P2 comportant trois champs opératifs, chacun destiné à contenir une instruction élémentaire.

À titre indicatif, le champ DCU est destiné à des instructions liées à des opérations arithmétiques. Le champ ACU est destiné à des instructions liées à des opérations d'adressage, et le champ SEQ est destiné à des instructions liées à des opérations de branchement ou de contrôle. Chacun des champs DCU, ACU, SEQ peut contenir soit une instruction élémentaire opérative soit une instruction non opérative NOP.

Ainsi, par exemple, la figure 3 présente une instruction VLIW1 comprenant trois instructions élémentaires opératives, respectivement I1 pour le champ DCU, I2 pour le champ ACU et I3 pour le champ SEQ. Le champ de données CST comprend une donnée D1.

La figure 4 présente une instruction VLIW2 dont les champs DCU et SEQ contiennent des instructions élémentaires opératives respectivement I4 et I5. Par contre une instruction NOP est contenue dans le champ ACU. Le champ de données CST comprend une donnée D2.

Selon l'invention, une instruction VLIW délivrée au processeur à partir du dispositif de mémoire est formée à partir de deux types d'instruction, une instruction dite primaire INSP et une instruction dite dictionnaire INSD.

Comme on le verra plus en détail ci-après, les instructions dictionnaires sont stockées dans une mémoire dictionnaire, et les instructions primaires dans une mémoire d'instructions.

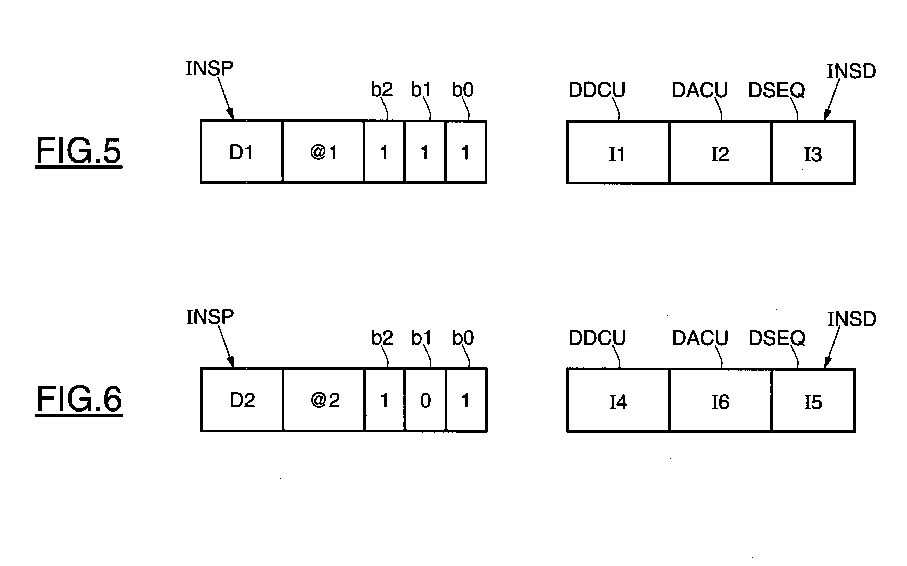

Ces deux types d'instruction sont présentées sur la figure 5. L'instruction dictionnaire INSD comprend autant de champs opératifs que l'instruction VLIW. Dans cet exemple, l'instruction dictionnaire INSD comprend donc trois champs opératifs DDCU, DACU, DSEQ correspondant respectivement aux trois champs opératifs DCU, ACU et SEQ de l'instruction VLIW présentée sur la figure 2. Les trois champs opératifs contiennent chacun une instruction élémentaire dictionnaire appartenant à l'ensemble des instructions élémentaires des instructions VLIW constituant le programme. Par exemple, l'instruction dictionnaire INSD de la figure 5 comprend, dans chacun de ses champs, une instruction élémentaire, respectivement I1, I2 et I3 de l'instruction VLIW de la figure 3.

Chaque instruction primaire INSP est associée à une instruction VLIW. Elle comprend un champ de données contenant des données D1 correspondant aux données du champ de données CST de l'instruction VLIW associée, un champ d'adresse contenant l'adresse dans la mémoire dictionnaire de l'instruction dictionnaire associée à l'instruction VLIW et des bits de masquage respectivement associés aux champs opératifs de l'instruction dictionnaire INSD. Dans cet exemple, il y a donc trois bits de masquage b2, b1 et b0 respectivement associée aux champs DDCU, DACU, DSEQ.

Aussi pour élaborer l'instruction VLIW de la figure 3, l'instruction primaire INSP de la figure 5 contient dans son champ de données, les données D1, dans son champ d'adresse, l'adresse @1 de l'instruction dictionnaire INSD présentée sur la figure 5. Cette instruction INSD contient les instructions élémentaires I1, I2 et I3 de l'instruction VLIW de la figure 3. Les bits de masquage b2, b1 et b0 ont chacun la valeur « 1 » car toutes les instructions élémentaires dictionnaires de l'instruction dictionnaire INSD sont utilisées pour former l'instruction VLIW considérée.

La figure 6 présente les instructions primaires INSP et dictionnaires INSD nécessaires pour former l'instruction VLIW présentée sur la figure 4. Ainsi l'instruction primaire INSP contient dans son champ de données, les données D2, dans son champ d'adresse, l'adresse @2 de l'instruction dictionnaire INSD présentée sur la figure 6. Celle-ci contient ici par exemple les instructions élémentaires I4, I6 et I5. Les bits de masquage b2, b1 et b0 ont respectivement les valeurs « 1 », « 0 » et « 1 ». De cette façon, les bits de masquage permettent de sélectionner uniquement les instructions I4 et I5 de l'instruction dictionnaire INSD afin de former l'instruction VLIW correspondante de la figure 4.

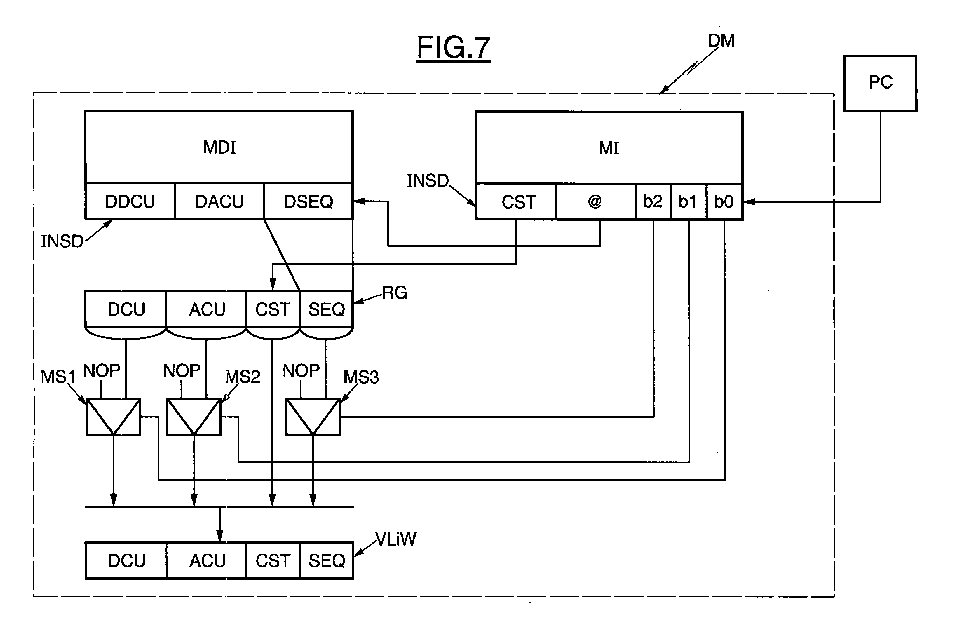

Un exemple d'architecture du dispositif de mémoire DM adapté à la délivrance des instructions VLIW telles que décrites ci-dessus est présenté sur la figure 7. Le dispositif de mémoire DM, comprend une mémoire dictionnaire MDI afin de stocker les instructions dictionnaires INSD. Selon l'invention, si après la compilation le code programme comporte n instructions VLIW, la mémoire dictionnaire MDI comporte p instructions dictionnaires, p étant inférieur à n.

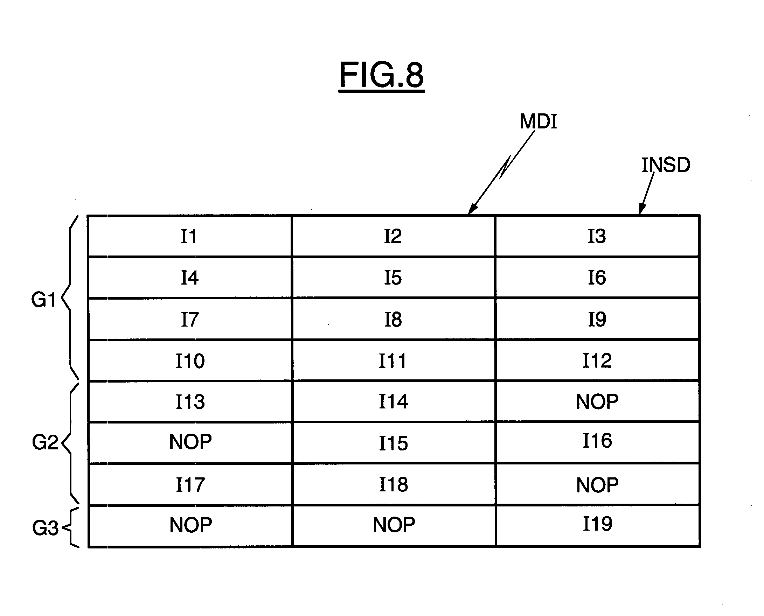

Les instructions dictionnaires INSD sont réparties selon plusieurs groupes distincts, trois groupes dans cet exemple. Cette répartition est présentée sur la figure 8. Un premier groupe G1 comprend les instructions dictionnaires INSD comportant trois instructions élémentaires dictionnaires opératives. Un second groupe G2 comprend les instructions dictionnaires INSD comportant deux instructions élémentaires dictionnaires opératives et une instruction NOP. Un troisième groupe G3 comprend les instructions dictionnaires INSD comportant une instruction élémentaire dictionnaire opérative et deux instructions élémentaires NOP. Le nombre d'instructions contenues dans le groupe G1 est en général plus important que le nombre d'instructions du groupe G2 qui est lui-même en général plus important que le nombre d'instructions du groupe G3. Le moyen d'aboutir à cette organisation de la mémoire dictionnaire MDI sera décrit ci-après.

Le dispositif de mémoire DM de la figure 7 comprend également une mémoire d'instructions MI où sont stockées les instructions primaires INSP. Le nombre d'instructions primaires est égal à n (nombre d'instructions VLIW du code programme). Une instruction primaire INSP associée à une instruction VLIW à délivrer est désignée par le pointeur programme PC. La mémoire d'instructions MI pointe alors sur l'instruction dictionnaire INSD désignée par l'adresse contenue dans le champ d'adresse de l'instruction primaire INSP désignée par le pointeur PC.

L'instruction dictionnaire désignée INSD délivre alors ses instructions élémentaires dictionnaires dans un registre RG et l'instruction primaire associée INSP délivre au même registre RG les données contenues dans son champ de données CST.

Le registre RG délivre alors les instructions élémentaires à des moyens de sélection MS1, MS2 et MS3 qui en outre reçoivent en entrée une instruction NOP. Chaque moyen de sélection (duplexeur) est commandé par un bit de masquage de l'instruction primaire INSP respectivement b0, b1 et b2. Selon la valeur du bit de masquage « 1 » ou « 0 », le moyen de sélection MSi délivre soit l'instruction élémentaire reçue en entrée soit une instruction NOP.

L'instruction VLIW à délivrer est alors élaborée avec les sorties des moyens de sélection MSi et les données directement issues du champ CST du registre RG.

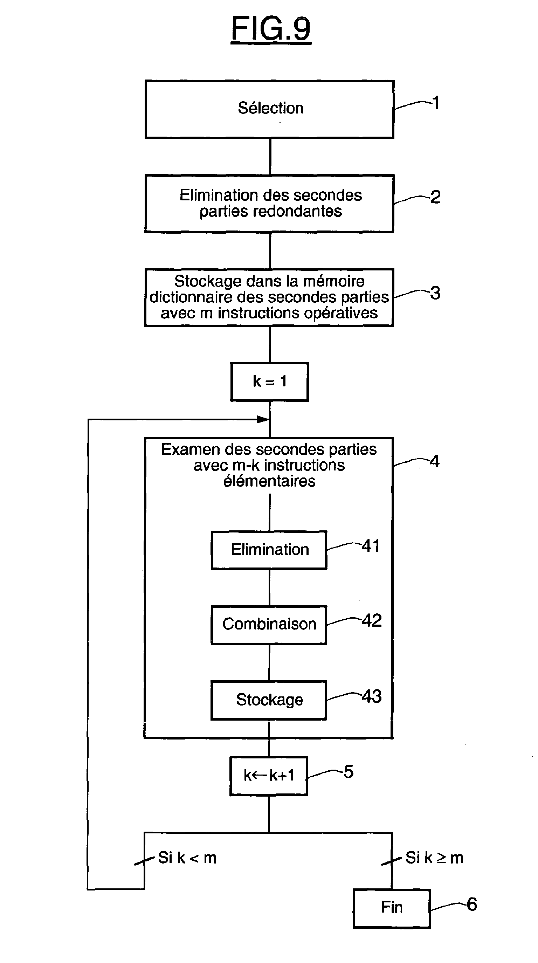

On va maintenant décrire plus en détail un procédé d'élaboration et de stockage des instructions élémentaires dictionnaires dans la mémoire dictionnaire MDI. L'organigramme de la figure 9 en illustre les principales étapes.

Sur la figure 2 une instruction VLIW issue de la compilation du code programme comporte une première partie P1 (champ CST) et une seconde partie P2 formée des champs opératifs DCU, ACU et SEQ.

La première étape (étape 1) consiste à sélectionner en vue de leur examen les secondes parties P2 des instructions VLIW obtenues à l'issue de la compilation.

Ensuite (étape 2), on élimine les parties P2 redondantes de façon à conserver un jeu de secondes parties P2, toutes mutuellement différentes.

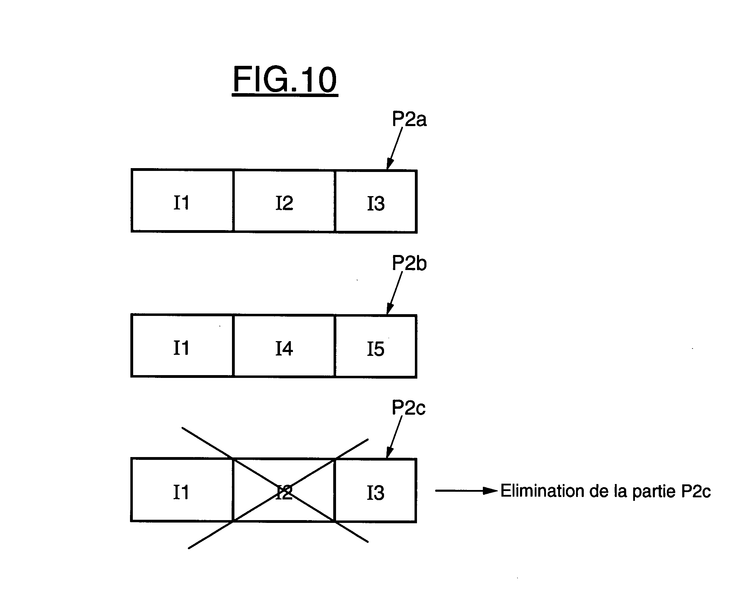

Par exemple, sur la figure 10 on a illustré trois parties P2a, P2b, P2c issues des trois instructions VLIW après compilation. Les parties P2a et P2c sont identiques (ou redondantes). On élimine donc par exemple la partie P2c pour ne conserver que les parties P2a et P2b.

On stocke alors (étape 3) dans la mémoire dictionnaire MDI, en tant qu'instructions dictionnaires INSD, les secondes parties P2 ne comportant que des instructions élémentaires opératives et aucune instruction NOP, c'est-à-dire dans cet exemple, m (=3) instructions élémentaires opératives.

On examine alors successivement (étape 4) les secondes parties des instructions VLIW comportant 3-k instructions élémentaires opératives, k variant successivement, dans cet exemple, de 1 à 2.

Chaque examen comporte les sous-étapes décrites ci-après.

Tout d'abord, on élimine (étape 40) les secondes parties examinées P2, pouvant être obtenues à partir des instructions dictionnaires INSD déjà stockées dans la mémoire dictionnaire MDI. En effet, comme nous l'avons décrit sur les figures 5 et 6, on peut reconstituer une instruction VLIW en sélectionnant les instructions dictionnaires élémentaires nécessaires déjà stockées à l'aide des bits de masquage de l'instruction primaire INSP.

On procède ensuite à la combinaison éventuelle de certaines secondes parties restantes (étape 41), de façon à obtenir des secondes parties P2 comportant m-k+1 instructions élémentaires opératives et les stocker dans la mémoire dictionnaire MDI en tant qu'instructions dictionnaires INSD.

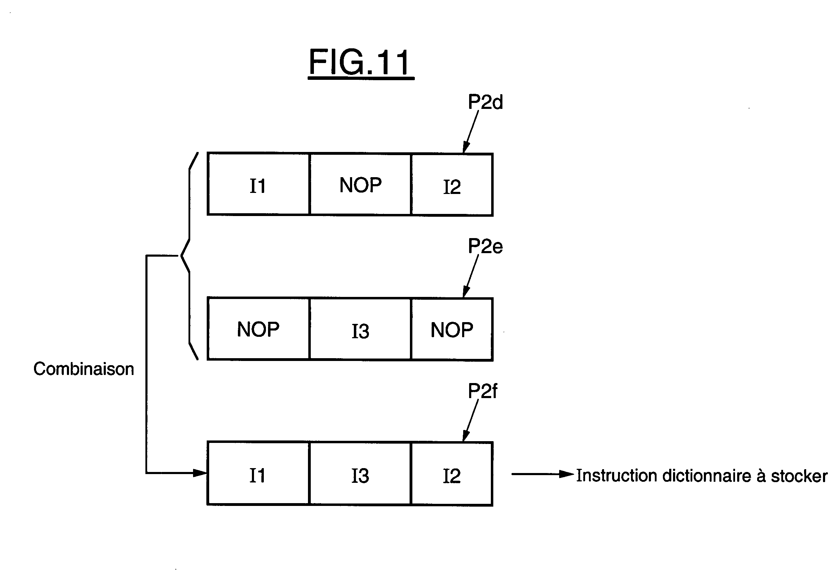

Par exemple, la figure 11 représente deux parties P2d et P2e comportant chacune deux instructions élémentaires opératives et une instruction NOP. La partie P2d comprend une instruction élémentaire I1, une instruction élémentaire non opérative NOP et une instruction élémentaire I2. La partie P2e comprend une instruction élémentaire non opérative NOP, une instruction élémentaire I3, une instruction élémentaire non opérative NOP. Ainsi on peut combiner ces deux parties P2d et P2e et stocker dans la mémoire dictionnaire MDI en tant qu'instruction dictionnaire INSD la partie P2f comportant les instructions élémentaires I1, I3 et I2. On pourra ultérieurement élaborer les parties P2d et P2e à partir de la partie P2f et des valeurs adéquates des bits de masquage b2, b1 et b0.

Puis, on stocke dans la mémoire dictionnaire MDI les secondes parties résiduelles P2 des instructions VLIW (étape 42), c'est-à-dire les deuxièmes parties P2 (comportant par exemple deux instructions opératives) ne pouvant pas être combinées avec d'autres deuxièmes parties P2 comportant le même nombre d'instructions opératives.

On incrémente alors k, (étape 5) puis on répète les sous-étapes 40 à 42 tant que k est strictement inférieur au nombre de champs opératifs d'une instruction VLIW, trois dans cet exemple. Dans le cas contraire, le processus d'élaboration et de stockage des instructions dans le mémoire dictionnaire MDI est terminé (étape 6).

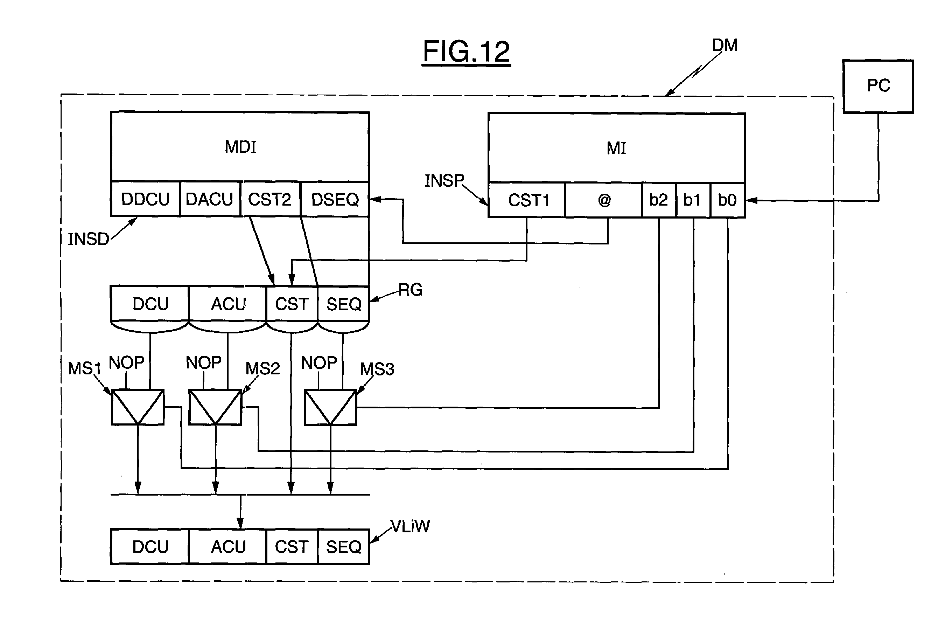

La figure 12, présente une variante de l'invention présentée sur la figure 7.

Le mot numérique de données d'une instruction VLIW comporte deux portions distinctes. La première portion peut par exemple contenir les bits de poids faibles du mot numérique de données et la seconde portion les bits de poids forts de ce même mot numérique de données.

Lors du stockage de ce mot numérique de données, la première portion dudit mot numérique de données est contenue dans la première partie de l'instruction primaire INSP associée à cette instruction VLIW, c'est-à-dire le champ CST1. La deuxième portion CST2 dudit mot numérique de données est contenue dans l'instruction dictionnaire désignée par l'adresse du champ d'adresse de ladite instruction primaire INSP.

Par suite, lorsque l'on reconstitue l'instruction VLIW, on associe la première partie de ladite instruction primaire INSP, les sorties des moyens de sélection MS1, MS2 et MS3, et ladite seconde portion contenue dans ladite instruction dictionnaire INSD désignée.

L'invention permet aussi par exemple une réduction de 50 % de la mémoire programme et par conséquent une réduction de 25 % de la surface du circuit intégré. Plus précisément, par exemple la taille de la mémoire programme selon l'invention correspond à une taille d'instruction inférieure à 31 bits contre 64 bits dans l'art antérieur.

## Revendications

1. Circuit intégré comprenant au sein d'un même substrat un processeur (PROC), et un dispositif de mémoire programme (DM) apte à délivrer au processeur (PROC) un jeu de n mots d'instruction très longs (VLIW), chaque mot d'instruction très long comprenant une première partie et une deuxième partie comportant au moins m champs opératifs contenant chacun une instruction élémentaire, **caractérisé par le fait que** le dispositif de mémoire programme (DM) comporte :
- une mémoire dictionnaire (MDI) comportant p instructions dictionnaire (INSD), p étant inférieur à n, chaque instruction dictionnaire (INSD) comportant au moins m champs opératifs contenant chacun une instruction élémentaire dictionnaire faisant partie de l'ensemble desdites instructions élémentaires,
- une mémoire d'instructions comportant n instructions primaires (INSP), chaque instruction primaire étant associée à un mot d'instruction très long (VLIW) et comportant une première partie correspondant à la première partie dudit mot d'instruction très long, un champ d'adresse contenant l'adresse d'une instruction dictionnaire (INSD) choisie compte tenu du contenu de la deuxième partie dudit mot d'instruction très long, et m bits de masquage (bi) respectivement associés aux m champs opératifs de l'instruction dictionnaire (INSD), et
- m moyens de sélection (MSi) respectivement commandés par les m bits de masquage et délivrant chacun en fonction de la valeur du bit de masquage correspondant soit une instruction élémentaire non opérative soit l'instruction élémentaire dictionnaire contenue dans le champ opératif correspondant, le mot d'instruction très long (VLIW) étant reconstitué à partir de la première partie de ladite instruction primaire (INSP) et d'au moins les sorties des moyens de sélection (MSi).

2. Circuit intégré selon la revendication 1 **caractérisé par le fait qu'**au moins une instruction élémentaire dictionnaire de chaque instruction dictionnaire (INSD) est une instruction élémentaire opérative.

3. Circuit intégré selon la revendication 2, **caractérisé par le fait que** les p instructions dictionnaires (INSD) sont réparties en m groupes distincts, chaque groupe contenant des instructions dictionnaires (INSD) ayant un même nombre d'instructions élémentaires opératives.

4. Circuit intégré selon la revendication 3, **caractérisé par le fait que** le nombre d'instructions dictionnaires (INSD) contenant k instructions élémentaires opératives est supérieur au nombre d'instructions dictionnaires (INSD) contenant k-1 instructions élémentaires opératives, k variant de 2 à m.

5. Circuit intégré selon l'une des revendications précédentes, **caractérisé par le fait que** la première partie de chaque mot d'instruction très long (VLIW) comprend un champ de données contenant un mot numérique de données, celui-ci étant entièrement stocké dans la première partie de l'instruction primaire (INSP) associée à ce mot d'instruction très long (VLIW) et stockée dans la mémoire d'instructions (MI).

6. Circuit intégré selon l'une des revendications 1 à 4, **caractérisé par le fait que** la première partie de chaque mot d'instruction très long (VLIW) comprend un champ de données contenant un mot numérique de donnée, **par le fait que** le mot numérique de données comporte une première portion contenue dans la première partie de l'instruction primaire (INSP) associée à ce mot d'instruction très long (VLIW), et une deuxième portion contenue dans l'instruction dictionnaire (INSD) désignée par l'adresse contenue dans ladite instruction primaire (INSP), et **par le fait que** le mot d'instruction très long (VLIW) est reconstitué à partir de la première partie de ladite instruction primaire (INSP), des sorties des moyens de sélection (MSi), et de ladite seconde portion contenu dans ladite instruction dictionnaire (INSD) désignée.

7. Circuit intégré selon la revendication 6, **caractérisé par le fait que** la première portion du champ de données numériques comporte les bits de poids faibles des données numériques et la seconde portion les bits de poids forts des données numériques.

8. Système de processeur vidéo, **caractérisé par le fait qu'**il comprend un circuit intégré selon l'une quelconque des revendications précédentes.

9. Procédé de délivrance de mots d'instruction très longs (VLIW) vers un processeur, **caractérisé par le fait qu'**il comprend :
a) une compilation d'un programme exécutable en un jeu de n mots d'instructions très longs, chaque mot d'instruction comprenant une première partie et une deuxième partie comportant au moins m champ opératifs contenant chacun une instruction élémentaire,
b) l'élaboration et le stockage dans une mémoire dictionnaire (MDI) de p instructions dictionnaires (INSD), p étant inférieur à n, chaque instruction dictionnaire (INSD) comportant au moins m champs opératifs contenant chacun une instruction élémentaire dictionnaire faisant partie de l'ensemble desdites instructions élémentaires,
c) l'élaboration et le stockage dans une mémoire d'instructions (MI) de n instructions primaires (INSP), chaque instruction primaire (INSP) étant associée à un mot d'instruction très long (VLIW) et comportant une première partie correspondant à la première partie dudit mot d'instruction très long (VLIW), un champ d'adresse contenant l'adresse d'une instruction dictionnaire (INSD) choisie compte tenu du contenu de la deuxième partie dudit mot d'instruction très long, et m bits de masquage (bi) respectivement associés aux m champs opératifs de l'instruction dictionnaire,
et **par le fait que** la délivrance d'un mot d'instruction très long comprend :
d) le pointage d'une instruction primaire dans la mémoire d'instructions (MI),
e) l'adressage de l'instruction dictionnaire (INSD) à partir de l'adresse contenue dans le champ d'adresse pointé de ladite instruction primaire (INSP),
f) la sélection en fonction de l'état des m bits de masquage (bi) de l'instruction primaire (INSP) pointée, soit d'une instruction élémentaire non opérative soit d'une instruction élémentaire dictionnaire contenue dans le champ opératif correspondant de l'instruction dictionnaire (INSD) adressée,
g) la reconstruction du mot d'instruction très long (VLIW) à partir de la première partie de ladite instruction primaire (INSP) pointée et d'au moins les instructions élémentaires sélectionnées.

10. Procédé selon la revendication 9, **caractérisé par le fait que** l'étape b) comprend les sous-étapes :
b1) sélectionner (étape 1) les secondes parties des mots d'instruction très longs (VLIW), obtenus à l'issue de la compilation,
b2) éliminer (étape 2) les secondes parties redondantes de façon à conserver un jeu de secondes parties, toutes mutuellement différentes,
b3) stocker (étape 3) dans la mémoire dictionnaire (MDI), en tant qu'instructions dictionnaires (INSD) les secondes parties comportant au moins m instructions élémentaires opératives,
b4) examiner (étape 4) successivement les secondes parties comportant m-k instructions élémentaires opératives, k variant successivement de 1 à m-1, chaque examen comportant :
- l'élimination (étape 40) parmi les secondes parties examinées de celles pouvant être obtenues à partir des instructions dictionnaires (INSD) déjà stockées dans la mémoire dictionnaire (MDI),
- la combinaison (étape 41) éventuelle de certaines secondes parties restantes, de façon à obtenir des secondes parties comportant m-k+1 instructions élémentaires opératives et les stocker dans 1a mémoire dictionnaire (MDI) en tant qu'instructions dictionnaires (INSD),
- le stockage (étape 42) dans la mémoire dictionnaire (MDI) des secondes parties résiduelles.
